# NOUVEAU FASCICULE DE BREVET EUROPEEN

(11) **EP 2 997 324 B2**
(45) Date de publication et mention de la décision concernant l'opposition: **17.11.2021**
(45) Mention de la délivrance du brevet: 11.04.2018
(21) Numéro de dépôt: 14731680.6
(22) Date de dépôt: 09.05.2014
(51) Int. Cl.: F41H 5/013, B62D 25/20, F41H 7/04

(54) **STRUCTURE DE PLANCHER POUR UNE CAISSE DE VEHICULE BLINDE**
BODENSTRUKTUR FÜR EINE GEPANZERTE FAHRZEUGKAROSSERIE
FLOOR STRUCTURE FOR AN ARMOURED VEHICLE BODY

(30) Priorité: 15.05.2013 FR 1301136
(43) Date de publication de la demande: 23.03.2016
(73) Titulaire: NEXTER Systems, 78034 Versailles Cedex (FR)
(72) Inventeur: GERMENOT, Olivier, 18023 Bourges (FR); TIMMER, Bernard, 18023 Bourges (FR); MALLAT, Didier, 18023 Bourges (FR)
(74) Mandataire: Cabinet Chaillot
(86) Numéro de dépôt international: PCT/FR2014/051077
(87) Numéro de publication internationale: WO 2014/184470

(56) Documents cités:
- EP-A1- 2 671 665
- EP-A2- 1 275 928
- EP-A2- 1 504 992
- FR-A1- 2 974 169
- GB-A- 2 390 888
- US-A1- 2005 132 873
- US-A1- 2012 097 019

## Description

Le domaine technique de l'invention est celui des caisses de véhicules blindés et en particulier des structures de planchers de ces caisses blindées.

Il est classique de définir une caisse de véhicule blindé mécanosoudée comportant un plancher qui est renforcé vis à vis des explosions de mines à effet de souffle.

Le renfort est obtenu le plus souvent par un accroissement de l'inertie de la protection du plancher, par exemple par l'adjonction de blindages additionnels. Une telle solution est cependant pénalisante du point de vue de la masse qui est ajoutée au véhicule.

Elle diminue également la garde au sol du véhicule ce qui pénalise sa mobilité et rapproche la structure de plancher du sol ce qui la rend plus vulnérable aux effets des mines.

Il est connu également, par exemple par le brevet EP1821061, de réaliser des caissons de protection de plancher déformables. Ces concepts de plancher déformables permettent de consommer une partie de l'énergie communiquée par la mine ce qui permet d'obtenir une protection de masse réduite.

Ces caissons sont le plus souvent conçus comme des surprotections rajoutées à une caisse de véhicule. Ils réduisent donc aussi la garde au sol du véhicule et ils se trouvent ainsi relativement proches des mines contre lesquelles ils doivent assurer la protection du véhicule.

Leur caractère déformable résulte alors d'un compromis entre les exigences de légèreté et celles de protection.

L'invention a pour objet de proposer une caisse de véhicule blindé et la structure de plancher associée qui permettent d'assurer une protection efficace avec à la fois un encombrement réduit et une masse réduite. L'invention permet ainsi d'obtenir une structure de plancher ayant une rigidité accrue sans accroissement de la masse de cette structure de plancher.

Un autre avantage de l'invention est qu'elle propose une structure de plancher comportant des bords latéraux arrondis. Ces bords libèrent de l'espace en dessous des parois latérales de la caisse, ce qui facilite l'intégration des moyens de mobilité (liaisons caisse/roues par exemple).

US 2012/097019 A1 décrit une structure de plancher conformément au préambule de la revendication 1. EP 1 504 992 A2 décrit une structure d'aéronef résistante et allégée et dans laquelle les plaques inférieures et supérieures de la structure sont assemblées par une structure interne croisillonnée avec liaison tenons/ languettes.

US 2005/132873 A1 décrit un mode d'assemblage un plancher relié à une paroi latérale par la liaison tenon/mortaise pour construire une structure blindée résistant aux impacts.

FR 2 974 169 A1 décrit l'assemblage d'une paroi latérale et d'un plancher par des chevilles d'encastrement.

Ainsi l'invention a pour objet une structure de plancher comprenant l'assemblage mécanosoudé d'une plaque interne sensiblement plane et d'une plaque externe comportant une partie médiane disposée à distance de la plaque interne et comportant aussi des bords latéraux rejoignant la plaque interne, structure destinée à être rendue solidaire de parois latérales pour constituer une caisse de véhicule, la plaque interne et la plaque externe étant liées l'une à l'autre par des raidisseurs s'étendant d'un premier bord de la plaque externe à un second bord qui lui est parallèle, chaque raidisseur étant en appui balistique sur chaque plaque, structure de plancher caractérisée en ce que chaque raidisseur comporte des languettes coopérant avec des rainures de chaque plaque afin d'assurer une liaison sans glissement d'une plaque par rapport à l'autre la plaque externe comportant par ailleurs des bords latéraux qui sont orientés sensiblement perpendiculairement à la plaque interne et seront en appui contre celle-ci, bords latéraux qui porteront des tenons régulièrement répartis le long de chaque bord latéral, tenons qui coopèreront avec des mortaises portées par la plaque interne.

La plaque interne pourra par ailleurs comporter des créneaux régulièrement répartis le long de ses bords latéraux, et disposés en alternance avec les assemblages tenons / mortaises, chaque créneau étant destiné à recevoir une dent d'une paroi latérale de la caisse.

Chaque raidisseur pourra être formé par une pièce plane.

Selon un autre mode de réalisation, chaque raidisseur peut être formé par une tôle pliée ayant en section une forme de U comportant une partie médiane plane en appui sur une plaque et deux joues latérales prolongées par des ailes parallèles à la partie médiane et en appui sur une autre plaque, les languettes étant ménagées par découpe dans le prolongement des joues latérales.
l'invention a également pour objet une caisse de véhicule blindé comportant une structure de plancher telle que décrite ci-dessus qui est rendue solidaire d'au moins deux parois latérales.

L'invention sera mieux comprise à la lecture de la description qui va suivre d'un mode de réalisation, description faite en référence aux dessins annexés et dans lesquels :
- La figure 1 est une vue schématique partielle et en perspective d'une caisse selon un mode de réalisation de l'invention,
- La figure 2 est une vue frontale de la caisse selon la figure 1, montrant la structure de plancher,
- La figure 3 est une vue en perspective de la structure de plancher selon ce mode de réalisation, structure dans laquelle on a retiré la plaque interne,
- La figure 4 est une vue de détail montrant dans ce mode de réalisation la coopération d'un raidisseur avec les plaques interne et externe,
- La figure 5 est une vue en perspective d'un raidisseur selon ce mode de réalisation,
- La figure 6 est une vue de dessous et en perspective d'une structure de plancher selon le mode de réalisation,
- La figure 7 est une vue latérale partielle et en perspective de la liaison entre la structure de plancher selon ce mode de réalisation et une paroi latérale de la caisse,
- La figure 8 est une vue schématique partielle et en perspective d'une caisse selon un second mode de réalisation, ne faisant pas partie de l'invention,
- La figure 9 est un vue frontale de la caisse selon la figure 8, montrant la structure de plancher selon le second mode de réalisation,
- La figure 10 est une vue de dessous et en perspective d'une caisse selon le second mode de réalisation,
- La figure 11 est une vue en perspective de la structure de plancher selon ce second mode de réalisation, structure dans laquelle on a retiré la plaque interne,
- La figure 12 est une vue de détail en coupe montrant dans ce second mode de réalisation la coopération d'un raidisseur avec les plaques interne et externe, la coupe est réalisée suivant le plan dont la trace BB est repérée à la figure 13,
- La figure 13 est une vue partielle en coupe transversale de la structure de plancher montrant le profil des raidisseurs selon ce second mode de réalisation ainsi que leur coopération avec les plaques internes et externe, la trace du plan de coupe est repérée AA sur la figure 12,
- La figure 14 est une vue en perspective d'un raidisseur selon ce second mode de réalisation.

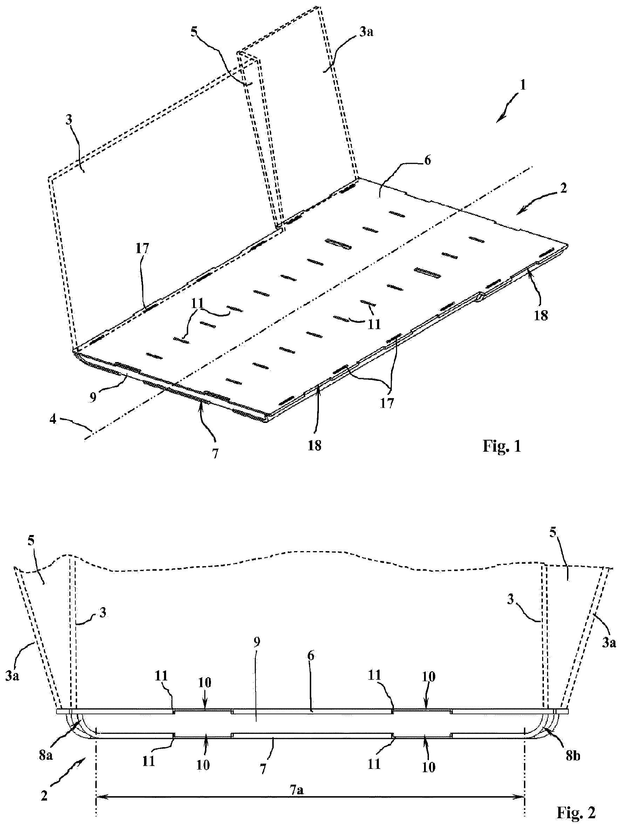

Les figures 1 à 7 montrent donc une caisse ou sa structure de plancher selon un mode de réalisation de l'invention.

Selon la figure 1, une caisse 1 d'un véhicule blindé comporte une structure de plancher 2 et au moins deux parois latérales 3 qui sont ici sensiblement perpendiculaires à la structure de plancher 2. Une seule paroi latérale 3 est figurée ici (en pointillés) pour des raisons de clarté. Une autre paroi est fixée à la structure de plancher 2 d'une façon symétrique de cette paroi par rapport à un plan vertical passant par un axe longitudinal 4 de la caisse.

Comme on le voit sur la figure 1 et la figure 2, dans ce mode particulier de réalisation la caisse 1 comporte aussi deux autres parois latérales 3a qui sont inclinées par rapport aux parois latérales 3 mais qui sont également fixées à la structure de plancher 2. Les parois 3 et 3a sont reliées par une paroi transversale 5. La caisse 1 comporte aussi une paroi avant et une paroi arrière ainsi qu'un plafond qui ne sont pas représentés car ces éléments ne font pas partie de l'invention.

La structure de plancher 2 comprend un assemblage mécanosoudé d'une plaque interne 6 sensiblement plane et d'une plaque externe 7. Les plaques 6 et 7 sont de préférence des plaques d'acier.

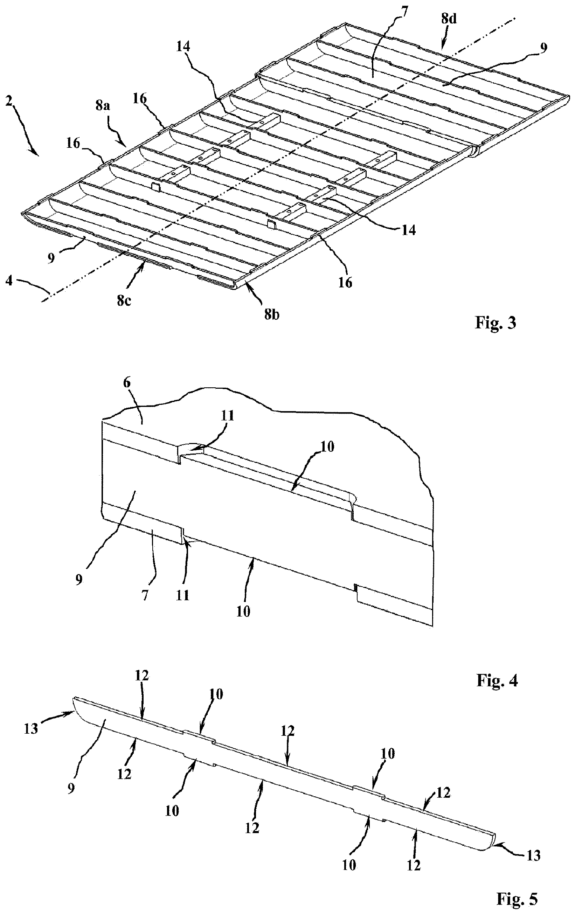

Comme on le voit plus particulièrement sur la figure 2, la plaque externe 7 comporte une partie médiane 7a qui est disposée à distance de la plaque interne 6. Cette plaque externe 7 a des bords latéraux 8a,8b qui sont courbes (courbure obtenue par pliage) et orientés sensiblement perpendiculairement à la plaque interne 6. Les bords latéraux 8a,8b de la plaque externe 7 rejoignent la plaque interne 6 et ils sont en appui contre celle-ci. La plaque 7 comporte aussi un bord avant 8c et un bord arrière 8d (figure 3).

Suivant la configuration représentée ici, la partie médiane 7a de la plaque externe 7 a une largeur qui est sensiblement égale à 90% de la largeur de la plaque interne 6.

Les bords latéraux 8a,8b sont en appui balistique contre la plaque interne 6. Le choc issu de l'explosion d'une mine se transmettra, par ces bords 8a,8b, de la plaque externe 7 à la plaque interne 6. On évite ainsi le déchirement de la structure de plancher au niveau des bords 8a,8b. Le choc est aussi transmis par un assemblage tenons 16 / mortaises 17 qui sera décrit par la suite.

Selon une caractéristique essentielle de l'invention, la plaque interne 6 et la plaque externe 7 sont liées l'une à l'autre par des raidisseurs 9 qui s'étendent transversalement d'un premier bord latéral 8a de la plaque externe 7 à un second bord latéral 8b.

Comme on le voit plus particulièrement sur les figures 2 et 4, chaque raidisseur 9 est en appui balistique sur chaque plaque 6, 7 et il comporte par ailleurs des languettes 10 qui coopèrent avec des rainures 11 réalisées dans chaque plaque 6 et 7.

La figure 5 montre un raidisseur 9 représenté seul. Un raidisseur est formé par une pièce plane formée par exemple par une tôle d'acier découpée par laser. Le raidisseur 9 comporte ici deux languettes 10 sur chaque côté. Les languettes 10 sont séparées par des portées planes 12 qui sont en appui balistique sur une des plaques 6 ou 7. Les chocs reçus par la plaque externe 7 sont donc transmis à la plaque interne 6 par l'intermédiaire des raidisseurs 9.

Chaque raidisseur 9 comporte à ses extrémités un profil courbe 13 qui a un profil correspondant à celui des bords latéraux courbes 8a,8b de la plaque externe 7.

Ainsi les raidisseurs 9 assurent également un soutien de la plaque externe 7 au niveau des bords latéraux courbes 8a,8b.

Comme on le voit plus clairement sur la figure 3, la structure de plancher 2 comporte des raidisseurs 9 parallèles les uns aux autres et régulièrement espacés sur toute la longueur de la structure 2. Les raidisseurs 9 ont tous sensiblement la même épaisseur que les plaques 7 et 6. On voit sur la figure 3 que des barrettes 14 parallèles à l'axe longitudinal 4 de la structure 2 sont fixées à la plaque extérieure 7. Ces barrettes 14 traversent certains des raidisseurs 9 et permettent la fixation d'un organe de transmission (non représenté) au niveau de la face inférieure de la plaque extérieure 7. Les barrettes 14 sont soudées à la plaque extérieure 7. Les barrettes 14 peuvent être remplacées par des écrous soudés à la plaque extérieure 7 et disposés en vis à vis de l'organe de transmission à fixer.

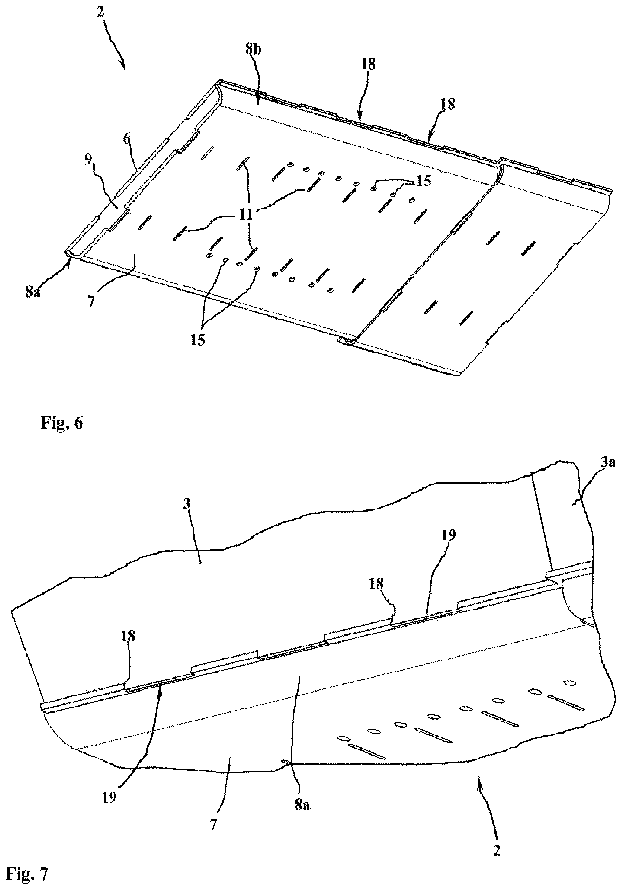

La fixation de l'organe de transmission se fait par des vis au travers de perçages 15 (voir la figure 6 qui montre la face inférieure de la structure de plancher 2).

On remarque sur la figure 3 que la plaque extérieure 7 porte sur ses bords latéraux 8a,8b des tenons 16 qui sont régulièrement répartis le long de chaque bord latéral 8a,8b. Ces tenons 16 sont destinés à coopérer avec des mortaises 17 portées par la plaque interne (voir la figure 1).

Ainsi l'appui balistique des bords 8a,8b de la plaque externe 7 sur la plaque interne 6 est complété par l'engagement des tenons 16 dans les mortaises 17. Une telle disposition empêche l'ouverture des bords 8a,8b par l'effet d'un choc.

Globalement, la plaque externe 7 se trouve liée à la plaque interne 6 à la fois par les assemblages tenons 16 / mortaises 17 de ses bords latéraux 8a,8b et par les assemblages languettes 10 / rainures 11 de chaque raidisseur 9 avec les deux plaques 6 et 7.

De tels moyens assurent une liaison sans glissement longitudinal ou transversal d'une plaque par rapport à l'autre. Il en résulte une rigidité accrue de la structure de plancher sans accroissement de la masse de cette structure. La structure n'est pas ici conçue comme un caisson dont la déformation absorbe l'énergie du choc mais plutôt comme une structure rigide mais ayant une masse réduite par rapport à un plancher monobloc de rigidité équivalente.

Bien sûr la structure de plancher est mécanosoudée, c'est à dire que les liaisons des raidisseurs avec les plaques externes et internes sont soudées ainsi que celles des bords latéraux 8a,8b de la plaque externe avec la plaque interne 6. L'architecture de la structure de plancher selon l'invention comporte des appuis balistiques entre tous les éléments, il en résulte une bonne résistance des soudures aux effets d'une explosion de mine.

Selon ce premier mode de réalisation de l'invention, la structure de plancher 2 peut être réalisée sous la forme d'un sous ensemble mécanique qui est assemblé ultérieurement aux différentes parois 3, 3a pour former une caisse 1 de véhicule.

Afin d'assurer une liaison entre les parois 3,3a et la structure 2 qui résiste aux effets de l'explosion d'une mine, la plaque interne 6 comporte des créneaux 18 qui sont régulièrement répartis le long de ses bords latéraux 8a,8b.

Ces créneaux 18 sont plus particulièrement visibles sur les figures 1 et 6. Ils sont disposés en alternance avec les assemblages tenons 16 / mortaises 17.

Chaque créneau 18 est destiné à recevoir une dent 19 d'une paroi latérale 3 ou 3a de la caisse 1. La figure 7 montre ainsi l'assemblage de la structure de plancher 2 avec les parois 3, 3a. Bien entendu on procède également à une soudure de la structure 2 aux parois 3, 3a après assemblage.

Ce montage créneaux 18 / dents 19 permet d'assurer un appui balistique entre chaque bord latéral 8a,8b de la structure de plancher 2 et les parois 3,3a. On améliore ainsi la résistance de la caisse. Les efforts issus de l'explosion d'une mine sont en effet transmis aux parois 3 sans déchirure des soudures liant la structure de plancher 2 et les parois.

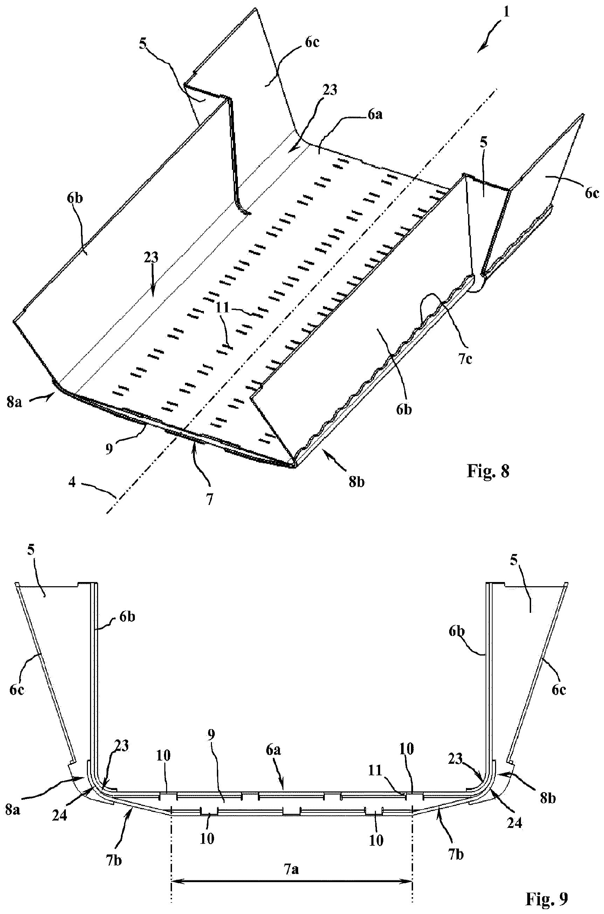

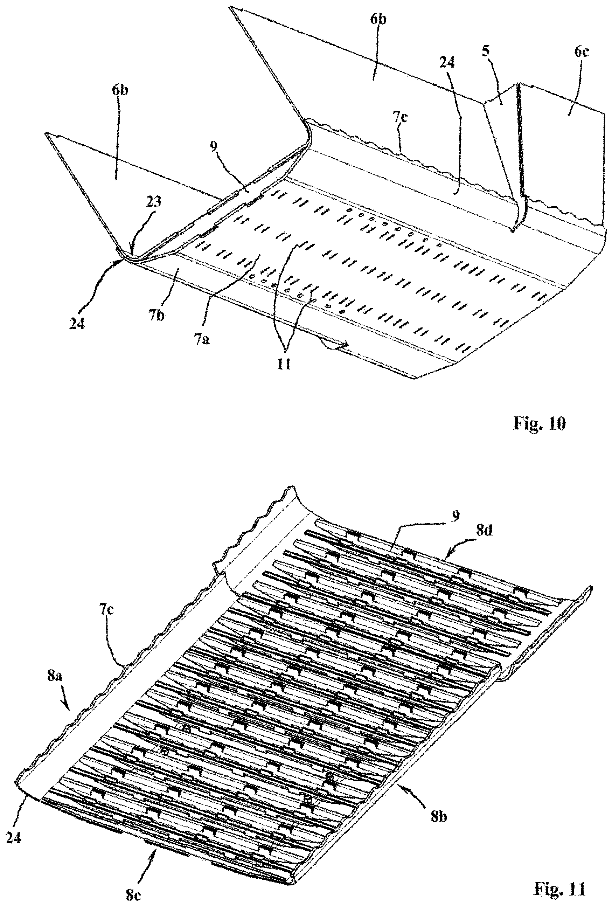

Les figures 8 à 14 montrent un second mode de réalisation d'une caisse de véhicule, ne faisant pas partie de l'invention.

Comme pour le mode précédent la caisse comporte une structure de plancher 2 comprenant un assemblage mécanosoudé d'une plaque interne 6 sensiblement plane et d'une plaque externe 7 comportant une partie médiane 7a disposée à distance de la plaque interne et comportant aussi des bords latéraux 8a,8b rejoignant la plaque interne 6.

Là encore la plaque interne 6 et la plaque externe 7 sont liées l'une à l'autre par des raidisseurs 9 qui s'étendent transversalement d'un premier bord latéral 8a de la plaque externe 7 à un second bord latéral 8b. Chaque raidisseur 9 est en appui balistique sur chaque plaque 6,7 et il comporte des languettes 10 coopérant avec des rainures 11 de chaque plaque afin d'assurer une liaison sans glissement d'une plaque par rapport à l'autre (voir les figures 8 et 9).

Ce mode de réalisation diffère du précédent d'une première part par la forme des raidisseurs 9.

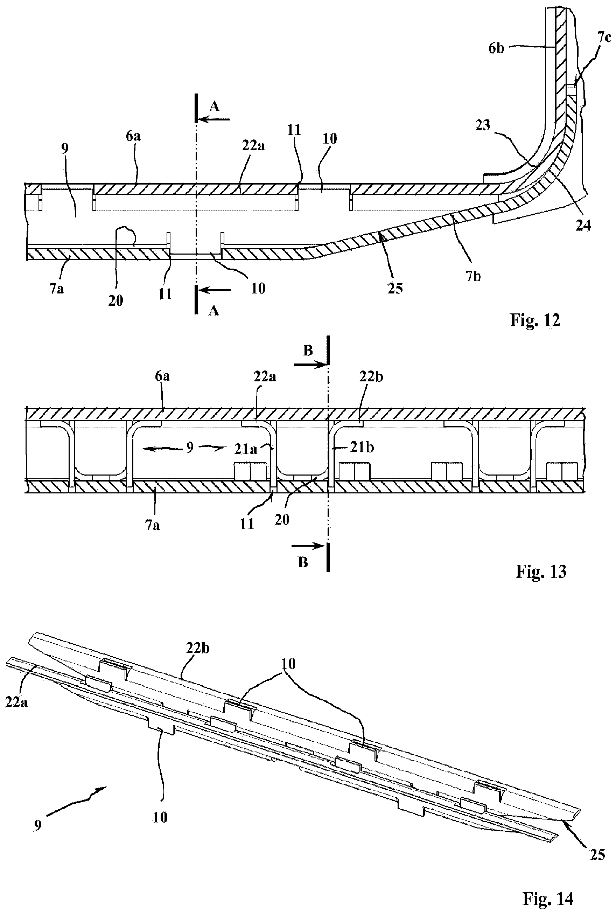

Les figures 12, 13 et 14 permettent de préciser la forme des raidisseurs 9.

Chaque raidisseur 9 est formé par une tôle pliée ayant en section une forme de U (voir la figure 13) qui comporte une partie médiane 20 plane qui est en appui sur la plaque externe 7 et deux joues latérales 21a,21b qui sont prolongées par des ailes 22a,22b parallèles à la partie médiane 20 et en appui sur la plaque interne 6.

Avant pliage du raidisseur 9, des languettes 10 sont ménagées par découpe de la tôle. Les languettes 10 se trouvent après pliage dans le prolongement des joues latérales 21a ou 21b. Comme on le voit sur les figures 9 et 14, chaque raidisseur comporte ici quatre languettes 10 coopérant avec la plaque interne 6 et trois languettes 10 coopérant avec la paroi externe 7.

Comme dans le mode précédent le raidisseur 9 est en appui contre chaque plaque 6 et 7 entre les différentes languettes 10. L'appui est assuré par la partie médiane 20 pour la plaque externe 7 et par les ailes 22a et 22b pour la plaque interne 6.

Par rapport au premier mode de réalisation, ce mode de réalisation permet à rigidité équivalente de définir des raidisseurs 9 plus légers.

Il serait tout à fait possible de définir des raidisseurs ayant une forme symétrique par rapport à un plan horizontal, c'est à dire pour lesquels la partie médiane 20 serait en appui sur la plaque intérieure et les ailes 22a et 22b seraient en appui sur la plaque externe 7.

Ce mode de réalisation diffère du précédent d'une seconde part par la forme de la plaque interne 6 et par le mode de liaison entre plaques interne 6 et externe 7.

La plaque interne 6 est ici formée par une tôle pliée ayant une partie médiane plane 6a formant une partie de la structure de plancher et prolongée par des parties latérales 6b, 6c formant les parois latérales de la caisse 1. Voir plus particulièrement les figures 8 et 9.

Les parois latérales 6b,6c et la partie médiane 6a sont reliées par des premières zones courbées 23.

La plaque externe 7 est formée par ailleurs par une tôle pliée qui a une partie médiane plane 7a parallèle à la partie médiane 6a de la plaque interne. La partie médiane 7a est prolongée par des parties latérales 7b qui sont sensiblement planes et inclinées vers la plaque interne 6 (figure 9). Les parties latérales 7b sont prolongées par des secondes zones courbées 24 qui sont en appui sur les premières zones courbées 23 de la plaque interne 6.

On notera par ailleurs que les parties latérales 7b de la plaque externe sont en appui sur les profils biseautés 25 des raidisseurs 9 (figures 12 et 14). La transmission des efforts entre plaque externe 7 et plaque interne 6 est donc également assurée au niveau de ces parties latérales des raidisseurs 9.

Comme on le voit sur les figures 8, 10 et 11, les bords latéraux 8a,8b de la plaque externe 7 ont des rebords 7c ondulés qui sont appliqués sur les parois latérales 6b de la caisse 1. Une soudure est par ailleurs réalisée entre la plaque externe 7 et les parois latérales 6b de la caisse 2 au niveau des rebords ondulés 7c.

Le contact de la plaque externe 7 avec la plaque interne 6 au niveau des première 23 et seconde 24 zones courbées assure la transmission des efforts liés à l'explosion d'une mine sans déchirure des plaques. Les rebords ondulés permettent de réaliser un cordon de soudure qui résiste particulièrement bien au cisaillement. Par ailleurs avec cette solution, en cas de rupture de la soudure du rebord ondulé, la plaque interne 6 reste intègre et il en est de même de l'habitacle du véhicule qu'elle délimite.

Ce mode de réalisation permet de réaliser une caisse dans laquelle la transmission des efforts liés à un choc mine est optimisée. En effet la plaque interne 6 forme une seule pièce avec les parois latérales 6b,6c. Les efforts sont donc transmis aux parois latérales.

Par ailleurs les efforts sont communiqués par la plaque externe 7 au travers d'un réseau de raidisseurs 9 qui couvrent toute la largeur de la structure de plancher et qui sont répartis régulièrement sur sensiblement toute la longueur du plancher. Il n'y a pas de zones affaiblies et la rigidité de la structure de plancher est forte avec une masse réduite. Comme dans le mode de réalisation précédent, la structure de plancher est une structure rigide mais ayant une masse réduite par rapport à un plancher monobloc de rigidité équivalente.

Différentes variantes sont possibles. Il est ainsi possible de mettre en oeuvre les raidisseurs pliés décrits en référence au second mode de réalisation avec la structure de plancher indépendante décrite en référence au premier mode de réalisation.

Le premier mode de réalisation permet de réaliser une caisse de véhicule avec des matériaux de nature ou de nuances différentes pour la structure de plancher et pour les parois. Le second mode de réalisation, ne faisant pas partie de l'invention, nécessite de réaliser les parois dans le même matériau que la plaque intérieure du plancher.

Dans tous les cas, le plancher du véhicule est un élément monobloc protégé sur toute sa surface avec une raideur forte pour une masse relativement réduite. La garde au sol du véhicule peut être importante sans pénaliser le volume interne au véhicule ni limiter la protection.

Différentes variantes sont possibles.

On a ainsi décrit des modes de réalisation dans lesquels les raidisseurs étaient régulièrement espacés sur toute la longueur de la structure de plancher. Il est bien entendu possible de donner aux raidisseurs une répartition non régulière. Les raidisseurs peuvent éventuellement être omis au niveau d'une partie du plancher pour laquelle la protection requise est moins importante.

Dans les modes de réalisation décrits, les raidisseurs s'étendaient transversalement d'un premier bord latéral 8a de la plaque externe à un second bord latéral 8b.

Il est possible de définir une caisse de véhicule (ou sa structure de plancher) dans laquelle les raidisseurs sont orientés suivant une direction perpendiculaire à cette orientation décrite.

Les raidisseurs pourraient ainsi être parallèles aux bords latéraux 8a,8b et s'étendre longitudinalement d'un bord avant 8c à un bord arrière 8d de la plaque externe 7.

Il est enfin possible de remplir le volume délimité par les plaques interne et externe avec un mousse expansive. Cette mousse sera mise en place au travers de trous de remplissage qui seront prévus au niveau de la plaque interne. La mousse pourra assurer une protection des plaques en acier contre la corrosion. La mousse pourra aussi améliorer la rigidité de la structure de plancher.

## Revendications

1. Structure de plancher (2) comprenant l'assemblage mécanosoudé d'une plaque interne (6) sensiblement plane et d'une plaque externe (7) comportant une partie médiane disposée à distance de la plaque interne et comportant aussi des bords latéraux (8a, 8b) rejoignant la plaque interne (6), structure destinée à être rendue solidaire de parois latérales pour constituer une caisse de véhicule, la plaque interne (6) et la plaque externe (7) étant liées l'une à l'autre par des raidisseurs (9) s'étendant d'un premier bord (8a) de la plaque externe à un second bord (8b) qui lui est parallèle, chaque raidisseur (9) étant en appui balistique sur chaque plaque (6,7), structure de plancher ***caractérisée en ce que*** chaque raidisseur (9) comporte des languettes (10) coopérant avec des rainures (11) de chaque plaque (6,7) afin d'assurer une liaison sans glissement d'une plaque par rapport à l'autre, lesdits bords latéraux (8a,8b) étant orientés sensiblement perpendiculairement à la plaque interne (6) et étant en appui contre celle-ci, bords latéraux qui portent des tenons (16) régulièrement répartis le long de chaque bord latéral (8a,8b), tenons (16) qui coopèrent avec des mortaises (17) portées par la plaque interne (6).

2. Structure de plancher selon la revendication 1, **caractérisée en ce que** la plaque interne (6) comporte des créneaux (18) régulièrement répartis le long de ses bords latéraux, et disposés en alternance avec les assemblages tenons (16) / mortaises (17), chaque créneau (18) étant destiné à recevoir une dent (19) d'une paroi latérale (3,3a) de la caisse.

3. Structure de plancher selon la revendication 1 à 2, **caractérisée en ce que** chaque raidisseur (9) est formé par une pièce plane.

4. Structure de plancher selon l'une des revendications 1 et 2, **caractérisée en ce que** chaque raidisseur (9) est formé par une tôle pliée ayant en section une forme de U comportant une partie médiane (20) plane en appui sur une plaque (6,7) et deux joues latérales (21a,21b) prolongées par des ailes (22a,22b) parallèles à la partie médiane (20) et en appui sur une autre plaque (6,7), les languettes (11) étant ménagées par découpe et se situant après découpe dans le prolongement des joues latérales (21a,21b).

5. Caisse (1) de véhicule blindé comportant une structure de plancher (2) selon une des revendications précédentes qui est rendue solidaire d'au moins deux parois latérales.

## Patentansprüche

1. Bodenstruktur (2) mit geschweißter Einheit, bestehend aus einer inneren Platte (6), die im wesentlichen eben ist, und einer äußeren Platte (7) mit einem mittleren Teil, der von der inneren Platte beabstandet ist, sowie mit seitlichen Rändern (8a,8b), die die innere Platte (6) erreichen, wobei die Struktur dazu bestimmt ist, mit Seitenwänden fest verbunden zu sein, um eine Fahrzeugkarosserie zu bilden, wobei die innere Platte (6) und die äußere Platte (7) miteinander durch Versteifungen (9) verbunden sind, die sich von einem ersten Rand (8a) der äußeren Platte bis zu einem zweiten Rand (8b) erstrecken, der parallel dazu ist, wobei jede Versteifung (9) auf jeder Platte (6,7) ballistisch abgestützt ist, wobei die Bodenstruktur **dadurch gekennzeichnet ist, dass** jede Versteifung (9) Laschen (10) umfasst, die mit Nuten (11) jeder Platte (6,7) zusammenwirken, um eine Verbindung ohne Gleiten einer Platte mit der anderen zu sichern, wobei die seitlichen Ränder (8a,8b) im wesentlichen senkrecht zur inneren Platte (6) ausgerichtet sind und gegen letztere lehnen, wobei die seitlichen Ränder Zapfen (16) tragen, die regelmäßig entlang jedem Seitenrand (8a,8b) verteilt sind und mit Zapfenlöchern (17) zusammenwirken, die von der inneren Platte (6) getragen werden.

2. Bodenstruktur nach Anspruch 1, **dadurch gekennzeichnet, dass** die innere Platte (6) Lücken (18) umfasst, die regelmäßig entlang ihren seitlichen Rändern verteilt sind, abwechselnd mit den Einheiten Zapfen (16) / Zapfenlöcher (17), wobei jede Lücke (18) dazu bestimmt ist, einen Zahn (19) einer Seitenwand (3,3a) der Karosserie aufzunehmen.

3. Bodenstruktur nach Anspruch 1 bis 2, **dadurch gekennzeichnet, dass** jede Versteifung (9) durch ein ebenes Element gebildet ist.

4. Bodenstruktur nach einem der Ansprüche 1 und 2, **dadurch gekennzeichnet, dass** jede Versteifung (9) durch ein gebogenes Blech gebildet ist, das im Querschnitt U-Form hat, mit einem mittleren Teil (20), der eben ist und sich auf eine Platte (6,7) stützt und zwei Seitenwangen (21a,21b), die durch Flügel (22a,22b) verlängert sind, die parallel zum mittleren Teil (20) sind und sich auf eine andere Platte (6,7) stützen, wobei die Laschen (11) durch Schneiden hergestellt sind und nach dem Schneiden in der Verlängerung der Seitenwangen (21a,21b) liegen.

5. Karosserie (1) eines gepanzerten Fahrzeugs mit einer Bodenstruktur (2) nach einem der vorherigen Ansprüche, die mit mindestens zwei Seitenwänden fest verbunden ist.

## Claims

1. A floor structure (2) comprising the mechanically-welded assembly of a substantially planar inner plate (6) and of an outer plate (7) comprising a median part located at a distance from the inner plate and also comprising lateral edges (8a, 8b) joined to the inner plate (6), wherein the structure is intended to be made integral with lateral walls in order to constitute a vehicle body, wherein the inner plate (6) and the outer plate (7) is connected to each other by stiffeners (9) extending from a first edge (8a) of the outer plate to a second edge (8b) parallel thereto, wherein each stiffener (9) rests in a ballistic manner on each plate (6, 7), wherein the floor structure is **characterised in that** each stiffener (9) comprises tabs (10) cooperating with grooves (11) of each plate (6, 7) so as to ensure a slip-free connection of one plate relative to the other, wherein said lateral edges (8a, 8b) are oriented substantially perpendicular to the inner plate (6) and resting against it, wherein the lateral edges carry lugs (16) evenly distributed along each lateral edge (8a, 8b), wherein he lugs (16) cooperate with mortises (17) carried by the inner plate (6).

2. The floor structure according to claim 1, **characterised in that** the inner plate (6) comprises crenels (18) evenly distributed along the lateral edges thereof and arranged alternately with the lugs (16)/mortises (17) assemblies, wherein each crenel (18) is intended to receive a tooth (19) of a lateral wall (3, 3a) of the body.

3. The floor structure according to claims 1 to 2, **characterised in that** each stiffener (9) is constituted by a planar part.

4. The floor structure according to one of claims 1 and 2, **characterised in that** each stiffener (9) is constituted by a bent plate which is U-shaped in section, comprising a planar median part (20) resting on a plate (6, 7) and two lateral flanges (21a, 21b) extended by wings (22a, 22b) parallel to the median part (20) and resting on another plate (6, 7), wherein the tabs (11) are performed by cutting and are located, after cutting, in the extension of the lateral flanges (21a, 21b).

5. A body (1) of armoured vehicle comprising a floor structure (2) according to one of the preceding claims which is made integral with at least two lateral walls.
